Europäisches Patentamt

European Patent Office

Office européen des brevets

(19)

(11) **EP 1 254 541 B1**

(12) **EUROPÄISCHE PATENTSCHRIFT**

(45) Veröffentlichungstag und Bekanntmachung des Hinweises auf die Patenterteilung:
**23.11.2005 Patentblatt 2005/47**

(21) Anmeldenummer: **01913542.5**

(22) Anmeldetag: **29.01.2001**

(51) Int Cl.[7]: **H04L 25/03**, H04B 7/06

(86) Internationale Anmeldenummer:
**PCT/DE2001/000342**

(87) Internationale Veröffentlichungsnummer:
**WO 2001/059952 (16.08.2001 Gazette 2001/33)**

(54) **VERFAHREN UND EINRICHTUNG ZUR DATENÜBERTRAGUNG MIT OPTIMIERTEN SENDESIGNALEN**

METHOD AND DEVICE FOR DATA TRANSMISSION WITH OPTIMISED TRANSMITTED SIGNALS

PROCEDE ET DISPOSITIF DE TRANSMISSION DE DONNEES AVEC SIGNAUX D'EMISSION OPTIMISES

(84) Benannte Vertragsstaaten:
**AT BE CH CY DE DK ES FI FR GB GR IE IT LI LU MC NL PT SE TR**

(30) Priorität: **07.02.2000 DE 10005324**

(43) Veröffentlichungstag der Anmeldung:
**06.11.2002 Patentblatt 2002/45**

(73) Patentinhaber: **SIEMENS AKTIENGESELLSCHAFT 80333 München (DE)**

(72) Erfinder:
 • **MEURER, Michael 67663 Kaiserslautern (DE)**
 • **PAPATHANASSIOU, Apostolos 17121 Athen (GR)**
 • **WEBER, Tobias 67731 Otterbach (DE)**
 • **LU, Yang 67663 Kaiserslautern (DE)**
 • **BAIER, Paul, Walter 67661 Kaiserslautern (DE)**

(56) Entgegenhaltungen:
 **WO-A-99/56441**

 • **BAIER P W ET AL: "Joint transmission (JT), an alternative rationale for the downlink of time division CDMA using multi-element transmit antennas" IEEE ISSSTA. IEEE INTERNATIONAL SYMPOSIUM ON SPREAD SPECTRUM TECHNIQUES AND APPLICATIONS, XX, XX, 6. September 2000 (2000-09-06), Seiten 1-5, XP002167882**

**Beschreibung**

Die herkömmliche Vorgehensweise bei der Datenübertragung von einem Sender zu einem Empfänger kann folgendermaßen charakterisiert werden:

- Im Sender prägt man die zu übertragenden Daten durch Modulation und ggf. vorhergehende Fehlerschutzcodierung einer Trägerschwingung auf.

- Das dadurch entstehende Signal wird vom Sender über die Sendeantenne abgestrahlt und über den Funkkanal zum Empfänger übertragen.

- Im Empfänger versucht man, aus dem im allgemeinen von einem Störsignal überlagerten, aus der Empfangsantenne entnommenen Empfangssignal die gesendeten Daten möglichst fehlerfrei zurückzugewinnen.

Damit der Empfänger die genannte Aufgabe der Datenrückgewinnung ausführen kann, und/oder damit er für diese Aufgabe möglichst optimal konditioniert werden kann, müssen in die empfängerseitige Signalverarbeitung u. a. Informationen über

- die senderseitig gewählten Verfahren der Signalerzengung,

- die Eigenschaften des Funkkanals, z.B. gewonnen durch Kanalschätzverfahren, und eventuell

- die Eigenschaften das empfangenen Störsignals

eingehen.
Die soeben geschilderte herkömmliche Vorgehensweise bei der Datenübertragung hat folgende Nachteile:

- Im Empfänger ist für das Gewinnen der gesendeten Daten erheblicher Signalverarbeitungsaufwand erforderlich, der besonders unangenehm ins Gewicht fällt, wenn es sich um den Empfänger eines mobilen Geräts handelt.

- Senderseitig eventuell bekannte Informationen über die Kanaleigenschaften werden beim Erzeugen der Sendesignale in der Regel gar nicht oder nicht konsequent im Sinne einer Optimierung des Übertragungssystems ausgenutzt.

Die WO 99/56 441 beschreibt ein Verfahren nach dem ersten Teil des Anspruchs 1 für den Fall mit 1 Sende- und 1 Empfangsantennen. Die Signalen werden vorentzerrt, wobei die Vorentzerrung die Funkkanäle und Codes berücknichtigt.
Der vorliegenden Erfindung liegt die Aufgabe zugrunde, den oben erläuterten und kritisierten Stand der Technik zu verbessern und dessen Mängel zu beheben.
Die Grundidee der vorliegenden Erfindung besteht darin, unter Kenntnis der im allgemeinen frequenzselektiven, zeitvarianten und direktionalen Kanalimpulsantwort zwischen Sender und Empfänger das Sendesignal so zu gestalten, daß das Empfangssignal vorgegebene, erwünschte Eigenschaften annimmt. Beispielsweise kann man versuchen, durch passende Wahl des Sendesignals ein Empfangssignal zu generieren, aus dem die gesendeten Daten im Empfänger auf besonders einfache und aufwandsgünstige Weise gewonnen werden können. Weiterhin ist es denkbar, beim Gestalten des Sendesignals zusätzlich gewisse Kriterien zu erfüllen; beispielsweise köunte angestrebt werden, Sendesignale mit minimalem Crest-Faktor zu erhalten.
Natürlich kann nicht grundsätzlich davon ausgegangen werden, daß im Sender die aktuelle, ja erst bei der Übertragung über den Funkkanal wirksam werdende Kanalimpulsantwort bekannt ist. Es gibt allerdings Fälle, in denen man eine solche Kenntnis voraussetzen kann. Ein Beispiel ist die Duplexübertragung nach dem Duplexverfahren TDD (Time Division Duplex). Bei einer TDD Übertragung verfügt jede der beiden Stationen über eine Sende-und Empfangseinrichtung, und es wird abwechselnd mit derselben Trägerfrequenz mal in die eine, mal in die andere Richtung übertragen. Bei einer gemessen an der Dauer aufeinanderfolgender Sendeabschnitte unterschiedlicher Übertragungsrichtung hinreichend großen Kohärenzzeit des Funkkanals kann man nun bei TDD davon ausgehen, daß die in jeder der beiden Übertragungsrichtungen wirksamen Kanalimpulsantworten zumindest nahezu gleich sind. Die im Empfänger der einen Station gewonnenen Kanalinformationen könnten deshalb beim anschließenden Gestalten des Sendesignals dieser Station nutzbringend eingebracht werden. Offen ist allerdings, in welcher Weise dies geschehen kann, und hier bietet die vorliegende Erfindung eine Lösung.
Der erfindungsgemäße Lösungsweg soll anhand eines Beispiels verdeutlicht werden. Es wird die Abwärtstrecke eines Funkübertragungssystems betrachtet, bei dem eine Basisstation (BS) gleichzeitig *K* Mobilstationen (MS) $\mu_k$, *k* = 1...*K*, bei der gleichen Trägerfrequenz bedient. Das Vielfachzugriffsproblem kann hierbei u. a. ähnlich wie bei dem Vielfachzugriffsverfahren CDMA in seiner einfachsten Empfängerversion gelöst werden, d.h. die Signaltrennung in den Empfängern der *K* Mobilstationen kann beispielsweise durch Korrelation erfolgen.

Im folgenden werden Signale entsprechend der zeitdiskreten äquivalenten Tiefpaßdarstellung von Bandpaßsignalen durch komplexe Vektoren dargestellt, die im weiteren abkürzend selbst als Signale bezeichnet und in Fettdruck wiedergegeben werden.

Die von der BS zur MS $\mu_k$, *k* = 1 ... *K*, zu sendenden, ggf. fehlerschutzcodierten Datensymbole - es werden *N* Datensymbole pro MS gesendet - werden zum Datenvektor

$$\underline{d}^{(k)} = (\underline{d}_1^{(k)} \ldots \underline{d}_N^{(k)})^{\mathsf{T}}, \ k = 1 \ldots K, \tag{1}$$

zusammengefaßt. Aus den *K* gleichzeitig zu sendenden Datenvektoren $\underline{d}^{(k)}$ nach (1) kann man den totalen Datenvektor

$$\underline{d} = (\underline{d}^{(1)\mathsf{T}} \ldots \underline{d}^{(K)\mathsf{T}})^{\mathsf{T}} \tag{2}$$

bilden.

Die Kanalimpulsantwort zwischen dem Sendeantenneneingang der BS und dem Empfangsantennenausgang der MS $\mu_k$ sei

$$\underline{h}^{(k)} = (\underline{h}_1^{(k)} \ldots \underline{h}_W^{(k)})^{\mathsf{T}}, \ k = 1 \ldots K. \tag{3}$$

Das Sendesignal wird durch den Vektor

$$\underline{s} = (\underline{s}_1 \ldots \underline{s}_S)^{\mathsf{T}} \tag{4}$$

der Länge *S* beschrieben. Aus den Kanalimpulsantworten $\underline{h}^{(k)}$ nach (3) kann man die Kanalimpulsantwortmatrizen

$$\underline{H}^{(k)} = \left( \underline{H}_{i,j}^{(k)} \right), \ i = 1 \ldots S + W - 1, \ j = 1 \ldots S, \ k = 1 \ldots K,$$

$$\underline{H}_{i,j}^{(k)} = \begin{cases} \underline{h}_{i-j+1}^{(k)} & \text{für } 1 \leq i - j + 1 \leq W, \\ 0 & \text{sonst,} \end{cases} \tag{5}$$

bilden. Mit diesen Matrizen und dem Sendesignal $\underline{s}$ nach (4) ergibt sich an jeder MS $\mu_k$ ein Empfangssignal

$$\underline{e}^{(k)} = (\underline{e}_1^{(k)} \ldots \underline{e}_{S+W\text{-}1}^{(k)})^{\mathsf{T}} = \underline{H}^{(k)} \cdot \underline{s}, \ k = 1 \ldots K, \tag{6}$$

der Länge *S* + *W* - 1. Die *K* Empfangssignale $\underline{e}^{(k)}$ nach (6) kann man zum totalen Empfangssignal

$$\underline{e} = (\underline{e}^{(1)\mathsf{T}} \ldots \underline{e}^{(K)\mathsf{T}})^{\mathsf{T}} \tag{7}$$

zusammenfassen, und aus den Kanalimpulsantwortmatrizen $\underline{H}^{(k)}$ nach (5) kann man die totale Kanalimpulsantwort-matrix

$$\underline{H} = (\underline{H}^{(1)\mathsf{T}} \ldots \underline{H}^{(k)\mathsf{T}} \ldots \underline{H}^{(K)\mathsf{T}})^{\mathsf{T}} \tag{8}$$

bilden. Mit $\underline{\boldsymbol{e}}$ nach (7) und $\underline{\boldsymbol{H}}$ nach (8) folgt aus (6)

$$e = H \cdot s. \tag{9}$$

Erfindungsgemäß sollen nun an das Empfangssignal $e$ Anforderungen gestellt werden, die man dadurch erfüllt; daß das Sendesignal $s$ nach Vorschriften gebildet wird, in die die an das Empfangssignal $e$ gestellten Anforderungen eingehen. Beispielsweise kann man von dem Empfangssignal $e$ fordern, daß aus ihm mit einer zwischen Sender und Empfänger vorher vereinbarten und somit sowohl sender als auch empfängerseitig verfügbaren $KN \times [K(S + W - 1)]$-Matrix $M$ durch die lineare Operation

$$M \cdot e = d \tag{10}$$

der senderseitig bekannte totale Datenvektor $d$ nach (2) entsteht. Aus (10) folgt mit (9)

$$M \cdot H \cdot s = d. \tag{11}$$

(11) repräsentiert ein aus $KN$ Gleichungen bestehendes Gleichungssystem und stellt eine erfindungsgemäße Vorschrift zum Bilden des Sendesignals $s$ nach (4) dar. Im vorliegenden Fall besteht diese Vorschrift darin, daß die $S$ Komponenten des Vektors $s$ nach (4) die $KN$ Gleichungen nach (11) erfüllen müssen. Bei dem Gleichungssystem nach (11) kann man drei Fälle unterscheiden:

- Die Komponentenanzahl $S$ von $s$ ist kleiner als die Gleichungsanzahl von (11), d. h.

$$S < K N. \tag{12}$$

In diesem Fall ist das Gleichungssystem (11) überbestimmt, und man kann $s$ beispielsweise gemäß

$$s = \left[ (M\,H)^{\bullet\mathrm{T}} M\,H \right]^{-1} (M\,H)^{\bullet\mathrm{T}} e \tag{13}$$

ermitteln.

- Die Komponentenanzahl $S$ von $s$ ist gleich der Gleichungsanzahl von (11), d. h.

$$S = K N. \tag{14}$$

In diesem Fall ist das Gleichungssystem (11) bestimmt, und man erhält aus (11)

$$s = (M\,H)^{-1}\,d. \tag{15}$$

- Die Komponentenanzahl $S$ von $s$ ist größer als die Gleichungsanzahl von (11), d. h.

$$S > K N. \tag{16}$$

In diesem Fall ist das Gleichungssystem (11) unterbestimmt, und man erhält als eine mögliche Lösung

$$s = (M\,H)^{\bullet\mathrm{T}} \left[ M\,H(M\,H)^{\bullet\mathrm{T}} \right]^{-1} d. \tag{17}$$

Bei einer speziellen Variante cer soeben dargestellten Vorgehensweise zum Bilden des Sendesignals $s$ wird jeder der $K$ MSn $\mu_k$, $k = 1 \ldots K$, ein CDMA-Code

$$\underline{c}^{(k)} = (\underline{c}_1^{(k)} \ldots \underline{c}_Q^{(k)})^\mathsf{T}, \; k = 1 \ldots K, \tag{18}$$

mit $Q$ Komponenten zugeordnet. Zum Erzielen einer besonders einfachen Empfängerstruktur sei am Empfangsantennenausgang einer jeden der $K$ MSn $\mu_k$, $k = 1 \ldots K$, ein an den der jeweiligen MS $\mu_k$ zugeordneten CDMA-Code $\underline{c}^{(k)}$ signalangepaßtes Filter vorgesehen. Die Länge des Sendesignals sei

$$S = NQ. \tag{19}$$

Mit den CDMA-Code-Matrizen

$$\underline{C}^{(k)} \;=\; \left(\underline{C}_{i,j}^{(k)}\right);\; i = 1 \ldots NQ + W - 1,\; j = 1 \ldots N,\; k = 1 \ldots K,$$

$$\underline{C}_{i,j}^{(k)} \;=\; \begin{cases} \underline{c}_{i-Q(j-1)}^{(k)} & \text{für } 1 \le i - Q(j-1) \le Q, \\ 0 & \text{sonst,} \end{cases} \tag{20}$$

wird die totale CDMA Code Matrix

$$\underline{C} = \begin{pmatrix} \underline{C}^{(1)} & O & \cdots & O \\ O & \underline{C}^{(2)} & \ddots & O \\ \vdots & \ddots & \ddots & O \\ O & \cdots & O & \underline{C}^{(K)} \end{pmatrix} \tag{21}$$

der Dimension $[K(NQ + W - 1)] \times KN$ gebildet, wobei $O$ eine Nullmatrix der Dimension $(NQ+W-1) \times N$ darstellt. Aus der totalen CDMA Code Matrix $\underline{C}$ läßt sich die Matrix

$$\underline{M} = \underline{C}^{*^\mathsf{T}}, \tag{22}$$

siehe (10, 17), ableiten. $\underline{s}$ wird also nach der Vorschrift

$$\underline{s} = \underline{H}^{*^\mathsf{T}} \, \underline{C} \, [\underline{C}^{*^\mathsf{T}} \underline{H} \, \underline{H}^{*^\mathsf{T}} \underline{C}]^{-1} \, \underline{d} \tag{23}$$

gebildet.

Die erfindungsgemäße Vorgehensweise, die vorstehend anhand eines Beispiels veranschaulicht wurde, läßt sich, wie aus den Patentansprüchen hervorgeht, ohne weiteres auf Fälle erweitern, in denen statt einer einzigen Sendestation mehrere Sendestationen vorhanden sind. Die Stationen können, wie bei obigem Beispiel vorausgesetzt, mit Einzelantennen, aber auch mit mehreren Antennen ausgestattet sein, die z.B. als Antennenarray oder in größerer räumlicher Entfernung voneinander angeordnet sein können.

In den Unteransprüchen 2 bis 23 werden Ausgestaltungen der im Hauptanspruch beschriebenen Erfindung vorgestellt.

**Patentansprüche**

1.   Verfahren zur kontinuierlichen oder burstförmigen Datenübertragung von einer oder mehreren Sendeantennen zu $K \geq 1$ Empfangsstationen, wobei

- an allen Sendestationen insgesamt $K_s \geq 1$ Sendeantennen vorhanden sind,
- jede der K Empfangsstationen $k$, $k$ = 1...$K$, mit einer empfangsstationsspezifischen Anzahl $K_e{}^{(k)} \geq 1$, $k$ = 1...$K$, von Empfangsantennen ausgestattet ist,
- zwischen den Sendestationen und der jeweiligen Empfangsstation $k$ insgesamt $K_s \cdot K_s{}^{(k)}$ Funkkanäle bestehen,
- eine Kanalimpulsantwort des Funkkanals zwischen der Sendeantenne $k_s$, $k_s$ = 1...$K_s$, und der Empfangsantenne $k_e{}^{(k)}$, $k_e{}^{(k)}$ = 1...$K_e{}^{(k)}$, der Empfangsstation $k$, $k$ = 1...$K$, bei zeitdiskreter Darstellung im äquivalenten Tiefpaßbereich durch einen Vektor $\underline{h}^{(ks,k,ke(k))}$ beschrieben wird,
- eine Gesamtheit der Kanalimpulsantworten $\underline{h}^{(ks,k,ke(k))}$ oder eine sendestationsspezifische Untermenge der Kanalimpulsantworten in allen oder in einer Teilmenge der Sendestationen exakt oder näherungsweise bekannt ist,
- von der Sendeantenne $k_s$, $k_s$ = 1...$K_s$, ein Signal abgestrahlt wird, in das zu sendende Daten eingehen, und das bei zeitdiskreter Darstellung im äquivalenten Tiefpaßbereich durch einen Vektor $\underline{s}^{(ks)}$, $k_s$ = 1...$K_s$, beschrieben wird, und
- von der Antenne $k_e{}^{(k)}$, $k_e{}^{(k)}$ = 1...$K_c{}^{(k)}$, der Empfangsstationen $k$, $k$ = 1...$K$, aufgrund der Sendesignale der Sendestationen jeweils ein Signal empfangen wird, das bei zeitdiskreter Darstellung im äquivalenten Tiefpaßbereich durch einen Vektor $\underline{e}^{(k,ke(k))}$ beschrieben wird, wobei den Empfangssignalen Störsignale überlagert sind.
- an die durch Störsignale überlagerten Empfangssignale $\underline{e}^{(k,ke(k))}$, $k$ = 1...$K$, $k_e{}^{(k)}$ = 1...$K_e{}^{(k)}$, Anforderungen gestellt werden, die **dadurch** erfüllt werden, daß die Sendesignale $\underline{s}^{(ks)}$, $k_s$ = 1...$K_s$, nach Vorschriften gebildet werden, in die
- die an die Empfangssignale $\underline{e}^{(k,ko(k))}$ gestellten Anforderungen,
- die Kanalimpulsantworten $\underline{h}^{(ks,k,ke(k))}$ oder deren Näherungen,
- Kriterien für die Sendesignale $\underline{s}^{(ks)}$, $k_s$ = 1...$K_s$, und
- die Kenntnis über die Störsignale, die den Empfangssignalen $\underline{e}^{(k,ke(k))}$, $k$ = 1...$K$, $k_c{}^{(k)}$ = 1... $K_e{}^{(k)}$, überlagert sind und nicht auf die Sendesignale $\underline{s}^{(ks)}$, $k_s$ = 1...$K_s$, zurückzuführen sind

eingehen,

**dadurch gekennzeichnet, daß**

die sendesignale ermittelt werden nach

$$\underline{s} = [(\underline{M}\ \underline{H})^{*T}\ \underline{M}\ \underline{H}]^{-1}\ (\underline{M}\ \underline{H})^{*T}\ \underline{e},$$

wobei eine Komponentenzahl $S$ von $\underline{s}$ kleiner einer Gleichungsanzahl $K\,N$ ist, und wobei N eine Anzahl von zu der jeweiligen Empfangsstation zu übertragende Datensymbolen angibt, $\underline{H}$ eine aus Kanalimpulsantwortmatrizen gebildete totale Kanalimpulsantwortmatrix und $\underline{M}$ eine nach

$$\underline{M} \cdot \underline{H} \cdot \underline{s} = \underline{d}$$

gebildete Matrix zu Bestimmung des totalen Datenvektors $\underline{d}$ darstellen.

2. Verfahren nach Anspruch 1, **dadurch gekennzeichnet, daß** die an die durch Störsignale überlagerten Empfangssignale $\underline{e}^{(k,k_e{}^{(k)})}$ der Empfangsstation $k$ gestellten Anforderungen darin bestehen, daß aus diesen Empfangssignalen alle oder einige der an der Empfangsstation $k$ interessierenden Daten durch lineare Operationen, bei denen die empfängerseitige Kenntnis der Kanalimpulsantworten $\underline{h}^{(k_s,k,k_e{}^{(k)})}$ nicht erforderlich ist, aus den Empfangssignalen $\underline{e}^{(k,k_e{}^{(k)})}$ exakt oder näherungsweise entstehen.

3. Verfahren nach Anspruch 1, **dadurch gekennzeichnet, daß** die an die durch Störsignale überlagerten Empfangssignale $\underline{e}^{(k,k_e{}^{(k)})}$ der Empfangsstation $k$ gestellten Anforderungen darin bestehen, daß aus diesen Empfangssignalen durch lineare Operationen, bei denen die empfängerseitige Kenntnis der Kanalimpulsantworten $\underline{h}^{(k_s,k,k_e{}^{(k)})}$ nicht erforderlich ist, Signale gebildet werden, aus denen alle oder einige der in der Empfangsstation $k$ interessierende Daten durch weitere Signalverarbeitungsschritte exakt oder näherungsweise ermittelt werden können.

4. Verfahren nach einem der Ansprüche, **dadurch gekennzeichnet, daß** die linearen Operationen Filterprozesse beinhalten oder ans Filterprozessen bestehen.

5. Verfahren nach einem der Ansprüche, **dadurch gekennzeichnet, daß** einige oder alle der $K_e{}^{(k)}$ der durch Störsi-

gnale überlagerten Empfangssignale $\underline{e}^{(k,k_e(k))}$ der Empfangsstation $k$ zunächst linear kombiniert und das Kombinationsergebnis anschließend einer Filterung unterzogen wird.

6. Verfahren nach einem der Ansprüche 1 bis 4, **dadurch gekennzeichnet, daß** einige oder alle der $K_e^{(k)}$ durch Störsignale überlagerten Empfangssignale $\underline{e}^{(k,k_e(k))}$ der Empfangsstation $k$ zunächst jeweils einzeln einer Filterung unterzogen werden und die Filterungsergebnisse anschließend linear kombiniert werden.

7. Verfahren nach einem der Ansprüche 1 bis 4, **dadurch gekennzeichnet, daß** einige oder alle der $K_e^{(k)}$ durch Störsignale überlagerten Empfangssignale $\underline{e}^{(k,k_e(k))}$ der Empfangsstation $k$ jeweils einzeln einer Filterung unterzogen werden, wobei aus einzelnen Filterausgangssignalen unterschiedliche Teilmengen der in der Empfangsstation $k$ interessierenden Daten gewonnen werden.

8. Verfahren nach einem der Ansprüche 1 bis 4, **dadurch gekennzeichnet, daß** einige oder alle der $K_e^{(k)}$ durch Störsignale überlagerten Empfangssignale $\underline{e}^{(k,k_e(k))}$ der Empfangsstation $k$ jeweils gleichzeitig mehreren Filtern zugeführt werden, wobei aus den einzelnen Filterausgangssignalen unterschiedliche Teilmengen der in der Empfangsstation $k$ interessierenden Daten gewonnen werden.

9. Verfahren nach einem der Ansprüche 1 bis 5 und 7 bis 8, **dadurch gekennzeichnet, daß** aus den Filterungsergebnissen einige oder alle interessierenden Daten durch nichtlineare Operationen exakt oder näherungsweise gewonnen werden.

10. Verfahren nach einem der Ansprüche, **dadurch gekennzeichnet, daß** es sich bei den Filterprozessen um signalangepaßte Filterungen handelt, wobei die Referenzsignale, an die die Filter signalangepaßt sind, CDMA-Codes sind.

11. Verfahren nach Anspruch 9, **dadurch gekennzeichnet, daß** die nichtlinearen Operationen nichtlineare Datenschätzalgorithmen, Fehlerschutzdecodierungen und/oder Entscheidungsrückkopplungen enthalten.

12. Verfahren nach Anspruch 1, **dadurch gekennzeichnet, daß** die an die durch Störsignale überlagerten Empfangssignale $\underline{e}^{(k,k_e(k))}$ der Empfangsstation $k$ gestellten Anforderungen darin bestehen, daß aus diesen Empfangssignalen alle oder einige der an der Empfangsstation $k$ interessierenden Daten durch Abtasten exakt oder näherungsweise gewonnen werden können.

13. Verfahren nach einem der Ansprüche, **dadurch gekennzeichnet, daß** in die Kriterien für die Sendesignale $\underline{s}^{(k_s)}$, $k_s = 1 \ldots K_s$, Anforderungen an die Einhüllenden der Sendesignale eingehen.

14. Verfahren nach Anspruch 13, **dadurch gekennzeichnet, daß** die Anforderungen an die Einhüllenden in der Forderung nach einem möglichst geringen Crest-Faktors bestehen.

15. Verfahren nach Anspruch 1, **dadurch gekennzeichnet, daß** die Anforderungen au die eventuell durch Störsignale überlagerten Empfangssignale $\underline{e}^{(k,k_e(k))}$ darin bestehen, daß diese Signale nach einem Ähnlichkeitskriterium möglichst ähnlich zu vorgegebenen Signalen werden.

16. Verfahren nach Anspruch 15 **dadurch gekennzeichnet, daß** die vorgegebenen Signale Überlagerungen von gewichteten oder ungewichteten empfangsstationsspezifischen Basissignalen sind.

17. Verfahren nach Anspruch 16, **dadurch gekennzeichnet, daß** die empfangsstationsspezifischen Basissignale CDMA-Codes sind.

18. Verfahren nach Anspruch 15 bis 17, **dadurch gekennzeichnet, daß** das Ähnlichkeitskriterium durch die Euklidsche Distanz gegeben ist.

19. Verfahren nach einem der Ansprüche, **dadurch gekennzeichnet, daß** alle oder einige der Sendesignale $\underline{s}^{(k_s)}$, $k_s = 1 \ldots K_s$, in ihrer gesamten Länge in einem einzigen Schritt gebildet werden.

20. Verfahren nach einem der Ansprüche 1 bis 18, **dadurch gekennzeichnet, daß** alle oder einige der Sendesignale $\underline{s}^{(k_s)}$, $k_s = 1 \ldots K_s$, abschnittsweise in mehreren Schritten gebildet werden.

21. Verfahren nach einem der Ansprüche, **dadurch gekennzeichnet, daß** alle Sendesignale $\underline{s}^{(k_S)}$, $k_s$ = 1 ... $K_S$, unter Berücksichtigen der Anforderungen an eine Teilmenge oder die Gesamtheit der durch Störsignale überlagerten Empfangssignale $\underline{e}^{(k,k}e^{(k))}$, $k$ = 1 ... $K$, $k_c^{(k)}$ = 1 ... $K_c^{(k)}$, gemeinsam gebildet werden.

22. Verfahren nach einem der Ansprüche 1 bis 20, **dadurch gekennzeichnet, daß** eine Teilmenge der Sendesignale $\underline{s}^{(k_S)}$, $k_s$ = 1 ... $K_S$, unter Berücksichtigen der Anforderungen an eine Teilmenge oder die Gesamtheit der durch Störsignale überlagerten Empfangssignale $\underline{e}^{(k,k_e(k))}s$, $k$ = 1...$K$, $k_e^{(k)}$ = 1 ... $K_e^{(k)}$ , gemeinsam gebildet werden.

23. Verfahren nach einem der Ansprüche, **dadurch gekennzeichnet, daß** in die Vorschriften zum Bilden der Sende-siguale $\underline{s}^{(k_S)}$, $k_s$ = 1...$K_S$, als Kriterium für bestimmte oder alle der Komponenten dieser Signale a-priori festgelegte Werte oder Wertebereiche für den Betrag, das Argument oder den komplexen Wert eingehen.

**Claims**

1. Method for data transmission, continuously or in bursts, with one or more transmitting antennas for $K \geq 1$ receiving stations, whereby

   • a total of $K_S \geq 1$ transmitting antennas is provided at all transmitting stations,
   • each of the $K$ receiving stations $k$, $k$ = 1 ... $K$ is fitted with a receiving-station-specific number $K_e^{(k)} \geq 1$, $k$ = 1 ... $K$ of receiving antennas,
   • there are a total of $K_s \cdot K_e^{(k)}$ radio channels between the transmitting stations and the respective receiving station $k$,
   • a channel impulse response of the radio channel between the transmitting antenna $k_s$, $k_s$ = 1 ... $K_s$, and the receiving antenna $k_e^{(k)}$, $k_e^{(k)}$ = 1 ... $K_e^{(k)}$, of the receiving station $k$, $k$ = 1 ... $K$, with a time-discrete representation in the equivalent lowpass range is described by a vector $\underline{h}^{(ks,k,ke\,(k))}$,
   • a totality of the channel impulse responses $\underline{h}^{(ks,k,ke\,(k))}$ or a subset of channel impulse responses specific to a transmitting station is known in all or in one subset of the transmitting stations, either precisely or approximately,
   • from the transmitting antenna $k_s$, $k_s$ = 1 ... $K_s$, a signal is radiated which includes the data to be transmitted and which with a time-discrete representation in the equivalent lowpass range is described by a vector $\underline{s}^{(ks)}$, $k_s$ = 1 ... $K_s$, and
   • from the antenna $k_e^{(k)}$, $k_e^{(k)}$ = 1 ... $K_e^{(k)}$, of the receiving stations $k$, $k$ = 1 ... $K$, a signal is received in each case based on the transmitted signals of the transmitting stations that, with a time-discrete representation in the equivalent lowpass range is described by a vector $\underline{e}^{(k,ke(k))}$, with interfering signals being superimposed on the received signals,
   • requirements are placed on the received signals $\underline{e}^{(k,ke(k))}$, $k$ = 1 ... $K$, $k_e^{(k)}$ = 1 ... $K_e^{(k)}$ superimposed by interfering signals, that are fulfilled in that the transmitted signals $\underline{e}^{(ks)}$, $k_s$ = 1 ... $K_s$, are formed according to rules that include:
   • the requirements placed on the received signals $\underline{e}^{(k,ke(k))}$,
   • the channel impulse responses $h^{(ks,k,ke(k))}$, or their approximations,
   • criteria for the transmitted signals $\underline{s}^{(ks)}$, $k_s$ = 1 ... $K_s$, and
   • knowledge of the interfering signals that are superimposed on the received signals $\underline{e}^{(k,ke(k))}$ $k$ = 1 ... $K$, $k_e^{(k)}$ = 1 ... $K_e^{(k)}$ and are not attributable to the transmitted signals $\underline{s}^{(ks)}$ $k_s$ = 1 ... $K_s$,

   **characterised in that**
   the transmitted signals are determined according to

   $$\underline{s} = [(\underline{M}\,\underline{H})^{*T}\,\underline{M}\,\underline{H}]^{-1}\,(\underline{M}\,\underline{H})^{*T}\,\underline{e}\ ,$$

   with a number of components $S$ of $\underline{s}$ being smaller than a number of equations $K\,N$, and with $N$ being a number of data symbols to be transmitted to the particular receiving station, $\underline{H}$ being a total channel impulse response matrix, formed from channel impulse response matrices, and $\underline{M}$ representing a matrix formed according to

   $$\underline{M} \cdot \underline{H} \cdot \underline{s} = \underline{d}$$

for determining the total data vector $\underline{d}$.

2.  Method in accordance with claim 1, **characterised in that** the requirements placed on the received signals $\underline{e}^{k,k}{}_e{}^{(k)}$ of the receiving station $k$, superimposed by interfering signals, are that from these receiving signals all or some of the data of interest at the receiving station $k$ arises from the received signals $\underline{e}^{k,k_e(k)}$ exactly or approximately by linear operations, whereby knowledge of the channel impulse responses $\underline{h}^{kk,k}{}_e{}^{(k)}$ is not required at the receiver end.

3.  Method in accordance with claim 1, **characterised in that** the requirements placed on the received signals $\underline{e}^{k,k}{}_e{}^{(k)}$ of the receiving station $k$, superimposed by interfering signals, are that signals are formed from these received signals by linear operations, whereby knowledge of the channel impulse responses $\underline{h}^{k_s,k,k}{}_e{}^{(k)}$ is not necessary at the receiver end, and from which all or some of the data of interest at the receiving station $k$ can be exactly or approximately determined by further signal processing steps.

4.  Method in accordance with one of the claims, **characterised in that** the linear operations contain filter processes or consist of filter processes.

5.  Method in accordance with one of the claims, **characterised in that** some or all of the $K_e{}^{(k)}$ received signals $\underline{e}^{k,k_e(k)}$ of the receiving station $k,$ superimposed by interfering signals, are first linearly combined and the result of the combination is then subjected to filtering.

6.  Method in accordance with one of claims 1 to 4, **characterised in that** some or all of the $K_{e(k)}$ received signals $\underline{e}^{k,k}{}_e{}^{(k)}$ of the receiving station $k,$ superimposed by interfering signals, are first in each case subjected to filtering individually and the results of the filtering are then linearly combined.

7.  Method in accordance with one of claims 1 to 4, **characterised in that** some or all of the $K_e{}^{(k)}$ received signals $\underline{e}^{k,k}{}_e{}^{(k)}$ of the receiving station $k$, superimposed by interfering signals, are in each case individually subjected to filtering, whereby different subsets of the data of interest at the receiving station $k$ are obtained from individual filter output signals.

8.  Method in accordance with one of claims 1 to 4, **characterised in that** some or all of the $K_e{}^{(k)}$ received signals $\underline{e}^{k,k}{}_e{}^{(k)}$ of the receiving station $k,$ superimposed by interfering signals, are in each case simultaneously applied to several filters, whereby different subsets of the data of interest at the receiving station $k$ are obtained from the individual filter output signals.

9.  Method in accordance with one of claims 1 to 5 and 7 to 8, **characterised in** some or all of the data of interest is exactly or approximately obtained by non-linear operations from the results of the filtering.

10. Method in accordance with one of the claims, **characterised in that** the filtering processes consist of signal-matched filtering, with the reference signals to which the filter signals are matched being CDMA codes.

11. Method in accordance with claim 9, **characterised in that** the non-linear operations contain non-linear data estimation algorithms, fault protection codes and/or decision feedbacks.

12. Method in accordance with claim 1, **characterised in that** the requirements placed on the received signals $\underline{e}^{k,k}{}_e{}^{(k)}$ of the receiving station $k$, superimposed by interfering signals, are that all or some of the data of interest at the receiving station $k$ can be obtained exactly or approximately from these received signals by sampling.

13. Method in accordance with one of the claims, **characterised in that** requirements for the envelope of the transmitted signals are included in the criteria for the transmitted signals $\underline{s}^{(k_S)}$, $k_S = 1 \ldots K_S$.

14. Method in accordance with claim 13, **characterised in that** the requirements for the envelope consist of a requirement for the smallest possible crest factor.

15. Method in accordance with claim 1, **characterised in that** the requirements for the received signals $\underline{e}^{k,k}{}_e{}^{(k)}$, that may be superimposed by interfering signals, are that these signals are as similar as possible to specified signals in accordance with a similarity criterion.

16. Method in accordance with claim 15, **characterised in that** the specified signals are overlays of weighted or unweighted basic signals specific to the receiving station.

**17.** Method in accordance with claim 16, **characterised in that** the basic signals specific to the receiving station are CDMA codes.

**18.** Method in accordance with claims 15 to 17, **characterised in that** the similarity criterion is given by the Euclidian distance.

**19.** Method in accordance with one of the claims, **characterised in that** all or some of the transmitted signals $\underline{s}^{(k_s)}$, $k_s = 1 \dots K_s$ are formed in their complete length in a single step.

**20.** Method in accordance with one of claims 1 to 18, **characterised in that** all or some of the transmitted signals $\underline{s}^{(k_s)}$, $k_s = 1 \dots K_s$ are formed in stages in several steps.

**21.** Method in accordance with one of the claims, **characterised in that** all transmitted signals $\underline{s}^{(k_s)}$, $k_s = 1 \dots K_s$ are jointly formed taking account of the requirements for a subset or the totality of the received signals $\underline{e}^{k,k_e(k)}$, $k = 1 \dots K$, $k_e^{(k)} = 1 \dots K_e^{(k)}$ superimposed by interfering signals.

**22.** Method in accordance with one of claims 1 to 20, **characterised in that** a subset of the transmitted signals $\underline{s}^{(k_s)}$, $k_s = 1 \dots K_s$ is jointly formed taking account of the requirements for a subset or the totality of the received signals $\underline{e}^{k,k_e(k)}$, $k = 1 \dots K$, $k_e^{(k)} = 1 \dots K_e^{(k)}$ superimposed by interfering signals.

**23.** Method in accordance with one of the claims, **characterised in that** the rules for forming the transmitted signals $\underline{s}^{(k_s)}$, $k_s = 1 \dots K_s$ include a-priori specified values or value ranges for the amount, the argument or the complex value as a criterion for certain or all of the components of these signals.


**Revendications**

**1.** Procédé pour la transmission de données, continue ou en forme de burst, par une ou plusieurs antennes d'émission vers $K \geq 1$ stations de réception,

- en tout $K_s \geq 1$ d'antennes d'émission étant présentes sur toutes les stations d'émission,
- chacune des $K$ stations de réception $k$, $k = 1 \dots K$ étant équipée d'un nombre $K_e^{(k)} \geq 1$, $k = 1 \dots K$ d'antennes de réception, spécifique à la station de réception,
- en tout $K_s - K_e^{(k)}$ canaux radio existant entre les stations d'émission et la station de réception respective $k$,
- une réponse impulsionnelle de canal du canal radio entre l'antenne d'émission $k_s$, $k_s = 1 \dots K_s$, et l'antenne de réception $k_e^{(k)}$, $k_e^{(k)} = 1 \dots K_e^{(k)}$ de la station de réception $k$ étant décrite au moyen d'un vecteur $\underline{h}^{(ks, k, ke(k))}$, $k = 1 \dots K$ en cas de représentation à valeurs discrètes en temps dans la plage équivalente de passe-bas,
- une totalité des réponses impulsionnelles de canal $\underline{h}^{(ks, k, ke(k))}$ ou un sous-ensemble des réponses impulsionnelles de canal, spécifique à la station de réception, étant connue de manière exacte ou approximative dans toutes les stations d'émission ou dans un sous-ensemble de celles-ci,
- un signal étant émis par l'antenne d'émission $k_s$, $k_s = 1 \dots K_s$, dans lequel entrent des données à émettre, et étant décrit par un vecteur $\underline{s}^{(ks)}$, $k_s = 1 \dots K_s$ en cas de représentation à valeurs discrètes en temps dans la plage équivalente de passe-bas, et
- un signal étant respectivement reçu par l'antenne $k_e^{(k)}$, $k_e^{(k)} = 1 \dots K_e^{(k)}$, des stations de réception $k$, $k = 1 \dots K$ en raison des signaux d'émission des stations d'émission, ce signal étant décrit par un vecteur $\underline{e}^{(k, ke(k))}$ en cas de représentation à valeurs discrètes en temps dans la plage équivalente de passe-bas, des signaux perturbateurs étant superposés aux signaux de réception,
- des exigences étant demandées aux signaux de réception $\underline{e}^{(k, ke(k))}$, $k = 1 \dots K$, $k_e^{(k)} = 1 \dots K_e^{(k)}$ superposés par les signaux perturbateurs, ces exigences étant remplies du fait que les signaux d'émission $\underline{s}^{(ks)}$, $k_s = 1 \dots K_s$ sont formés selon des règles, dans lesquels entrent
- les exigences demandées aux signaux de réception $\underline{e}^{(k, ke(k))}$,
- les réponses impulsionnelles de canal $\underline{h}^{(ks, k, ke(k))}$ ou leurs approximations,
- les critères pour les signaux d'émission $\underline{s}^{(ks)}$, $k_s = 1 \dots K_s$ et
- la connaissance sur les signaux perturbateurs qui sont superposés aux signaux de réception $\underline{e}^{(k, ke(k))}$, $k = 1 \dots K$, $ke^{(k)} = 1 \dots K_e^{(k)}$, et ne sont pas dus aux signaux d'émission $\underline{s}^{(ks)}$, $k_s = 1 \dots K_s$,

**caractérisé en ce que**
les signaux d'émission sont déterminés selon

$$\underline{s} = [ \, (\underline{M} \; \underline{H})^{*T} \; \underline{M} \; \underline{H}]^{-1} \; (\underline{M} \; \underline{H})^{*T} \; \underline{e},$$

un nombre de composants $S$ de $\underline{s}$ étant inférieur à un nombre d'équations $K \, N$, et $N$ indiquant un nombre de symboles de données à transmettre vers la station de réception respective, $\underline{H}$ représentant une matrice totale de réponses impulsionnelles de canal formée par des matrices de réponses impulsionnelles de canal et $\underline{M}$ une matrice formée selon

$$\underline{M} - \underline{H} \cdot \underline{s} = \underline{d}$$

pour déterminer le vecteur de données total $\underline{d}$.

2. Procédé selon la revendication 1, **caractérisé en ce que** les exigences demandées aux signaux de réception $\underline{e}^{(k, \, ke(k))}$ de la station de réception $k$, superposés par des signaux perturbateurs, consistent **en ce qu'**à partir de ces signaux de réception, toutes les données ou quelques-unes des données intéressantes dans la station de réception $k$ sont créées de manière exacte ou approximative à partir de signaux de réception $\underline{e}^{(k, \, ke(k))}$ au moyen d'opérations linéaires, dans lesquelles la connaissance côté réception des réponses impulsionnelles de canal $\underline{h}^{(ks, \, k, \, ke(k))}$ n'est pas nécessaire.

3. Procédé selon la revendication 1, **caractérisé en ce que** les exigences demandées aux signaux de réception $\underline{e}^{(k, \, ke(k))}$ de la station de réception $k$, superposés par des signaux perturbateurs, consistent **en ce qu'**à partir de ces signaux de réception, des signaux sont formés au moyen d'opérations linéaires, dans lesquelles la connaissance côté réception des réponses impulsionnelles de canal $\underline{h}^{(ks, \, k, \, ke(k))}$ n'est pas nécessaire, à partir desquels signaux toutes les données ou quelques-unes des données intéressantes dans la station de réception $k$ peuvent être déterminées de manière exacte ou approximative au moyen d'autres étapes de traitement de signaux.

4. Procédé selon l'une quelconque des revendications, **caractérisé en ce que** les opérations linéaires comprennent des processus de filtrage ou consistent en des processus de filtrage.

5. Procédé selon l'une quelconque des revendications, **caractérisé en ce que** quelques-uns ou tous les $K_e^{(k)}$ des signaux de réception $\underline{e}^{(k, \, ke(k))}$ de la station de réception $k$, superposés par des signaux perturbateurs, sont d'abord combinés de manière linéaire et **en ce que** le résultat de la combinaison est ensuite soumis à un filtrage.

6. Procédé selon l'une quelconque des revendications 1 à 4, **caractérisé en ce que** quelques-uns ou tous les $K_e^{(k)}$ des signaux de réception $\underline{e}^{(k, \, ke(k))}$ de la station de réception $k$, superposés par des signaux perturbateurs, sont d'abord respectivement soumis individuellement à un filtrage et **en ce que** les résultats du filtrage sont ensuite combinés de manière linéaire.

7. Procédé selon l'une quelconque des revendications 1 à 4, **caractérisé en ce que** quelques-uns ou tous les $K_e^{(k)}$ des signaux de réception $\underline{e}^{(k, \, ke(k))}$ de la station de réception $k$, superposés par des signaux perturbateurs, sont respectivement soumis individuellement à un filtrage, différents sous-ensembles des données intéressantes dans la station de réception $k$ étant obtenus à partir de signaux de sortie de filtrage individuels.

8. Procédé selon l'une quelconque des revendications 1 à 4, **caractérisé en ce que** quelques-uns ou tous les $K_e^{(k)}$ des signaux de réception $\underline{e}^{(k, \, ke(k))}$ de la station de réception $k$, superposés par des signaux perturbateurs, sont respectivement amenés simultanément à plusieurs filtres, différents sous-ensembles des données intéressantes dans la station de réception $k$ étant obtenus à partir des signaux de sortie de filtrage individuels.

9. Procédé selon l'une quelconque des revendications 1 à 5 et 7 à 8, **caractérisé en ce qu'**à partir des résultats de filtrage, quelques-unes ou toutes les données intéressantes sont obtenues de manière exacte ou approximative au moyen d'opérations non linéaires.

10. Procédé selon l'une quelconque des revendications, **caractérisé en ce que** les processus de filtrage sont des filtrages adaptés en fonction du signal, les signaux de référence, auxquels les filtres sont adaptés en fonction du signal, étant des codes CDMA.

**11.** Procédé selon la revendication 9, **caractérisé en ce que** les opérations non linéaires comprennent des algorithmes d'évaluation de données, des décodages de protection contre les erreurs et/ou des rétrocouplages de décisions.

**12.** Procédé selon la revendication 1, **caractérisé en ce que** les exigences demandées aux signaux de réception $\underline{e}^{(k,\ ke(k))}$ de la station de réception $k$, superposés par des signaux perturbateurs, consistent **en ce qu'**à partir de ces signaux de réception, toutes les données ou quelques-unes des données intéressantes dans la station de réception $k$ peuvent être obtenues de manière exacte ou approximative par balayage.

**13.** Procédé selon l'une quelconque des revendications, **caractérisé en ce que** des exigences aux enveloppes des signaux d'émission entrent dans les critères pour les signaux d'émission $\underline{s}^{(ks)},\ k_s = 1 \dots K_s$.

**14.** Procédé selon la revendication 13, **caractérisé en ce que** les exigences aux enveloppes consistent à exiger un facteur de crête le plus petit possible.

**15.** Procédé selon la revendication 1, **caractérisé en ce que** les exigences demandées aux signaux de réception $\underline{e}^{(k,\ ke(k))}$ éventuellement superposés par des signaux perturbateurs, consistent **en ce que** ces signaux deviennent le plus possible similaires à des signaux prédéfinis selon un critère de similitude.

**16.** Procédé selon la revendication 15, **caractérisé en ce que** les signaux prédéfinis sont des superpositions de signaux de base pondérés ou de signaux de base non pondérés, spécifiques à la station de réception.

**17.** Procédé selon la revendication 16, **caractérisé en ce que** les signaux de base spécifiques à la station de réception sont des codes CDMA.

**18.** Procédé selon les revendications 15 à 17, **caractérisé en ce que** le critère de similitude est donné par la distance euclidienne.

**19.** Procédé selon l'une des revendications, **caractérisé en ce que** tous les signaux d'émission ou quelques-uns des signaux d'émission $\underline{s}^{(ks)},\ k_s = 1 \dots K_s$ sont formés dans leur longueur totale en une seule étape.

**20.** Procédé selon l'une quelconque des revendications 1 à 18, **caractérisé en ce que** tous les signaux d'émission $\underline{s}^{(ks)},\ k_s = 1 \dots K_s$ ou quelques-uns sont formés par sections en plusieurs étapes.

**21.** Procédé selon l'une quelconque des revendications, **caractérisé en ce que** tous les signaux d'émission $\underline{s}^{(ks)},\ k_s = 1 \dots K_s$ sont formés en commun en tenant compte des demandes faites à un sous-ensemble ou à la totalité des signaux de réception $\underline{e}^{(k,\ ke(k))},\ k = 1 \dots K,\ k_e^{(k)} = 1 \dots K_e^{(k)}$ superposés par des signaux perturbateurs.

**22.** Procédé selon l'une quelconque des revendications 1 à 20, **caractérisé en ce qu'**un sous-ensemble des signaux d'émission $\underline{s}^{(ks)},\ k_s = 1 \dots K_s$ sont formés en commun en tenant compte des demandes faites à un sous-ensemble ou à la totalité des signaux de réception $\underline{e}^{(k,\ ke(k))},\ k = 1 \dots K,\ k_e^{(k)} = 1 \dots K_e^{(k)}$ superposés par des signaux perturbateurs.

**23.** Procédé selon l'une quelconque des revendications, **caractérisé en ce que** des valeurs déterminées à priori ou des plages de valeurs pour le montant, l'argument ou la valeur complexe, entrent dans les règles destinées à former les signaux d'émission $\underline{s}^{(ks)},\ k_s = 1 \dots K_s$, en tant que critère pour certains ou pour tous les composants de ces signaux.